# DEMANDE DE BREVET EUROPEEN

(11) **EP 1 231 017 A1**
(43) Date de publication de la demande: **14.08.2002**
(21) Numéro de dépôt: 02290274.6
(22) Date de dépôt: 05.02.2002
(51) Int. Cl.: B23P 19/00, B23P 21/00, B23Q 7/14, B23Q 7/04, B65G 37/02, B65G 47/90

(54) **Dispositif de transfert à haute précision pour le dépot d'une pièce sur une palette immobilisée**

(30) Priorité: 09.02.2001 FR 0101800
(71) Demandeur: Prodel Holding, 60170 Carlepont (FR)
(72) Inventeur: Prodel, Jacques, 60170 Carlepont (FR)
(74) Mandataire: Bezault, Jean

(57) **Abrégé**

Un dispositif (14) pour le transfert d'au moins une pièce (38) à déposer sur une palette immobilisée (12) comprend un transporteur (42) équipé d'un préhenseur (50) et propre à saisir la pièce (38) sur un distributeur (40), à la déplacer et à la déposer dans un outil de positionnement (54), ainsi qu'un manipulateur (60) équipé d'une pince (62) et propre à saisir la pièce dans une position précise dans l'outil de positionnement (54), à la déplacer et à la déposer dans une position précise dans un réceptacle de positionnement (64) porté par la palette (12).

## Description

L'invention se rapporte au transfert de pièces sur des palettes.

Elle concerne plus particulièrement un dispositif de transfert à haute précision pour le dépôt d'une pièce sur une palette immobilisée.

Un tel dispositif de transfert est destiné plus particulièrement à faire partie d'une installation pour la circulation de palettes porte-pièces se déplaçant dans des modules par des moyens d'entraînement particuliers. De telles installations, que l'on appelle aussi "ateliers flexibles", comprennent des modules qui peuvent accueillir des postes de travail et/ou offrir des fonctions de circulation pure. Ainsi, une palette peut se déplacer entre différents postes de travail afin d'effectuer une succession d'opérations, par exemple d'assemblage et/ou d'usinage, sur les pièces que portent les palettes.

Il est nécessaire, dans certains cas, de prévoir des moyens pour transférer une pièce, avec une précision élevée, sur une palette immobilisée au niveau d'un poste de travail.

Ceci peut être le cas, notamment, lorsqu'il s'agit d'assembler une pièce, par exemple un composant ou élément d'un produit, sur un autre composant ou élément de ce produit, qui est déjà porté par la palette.

La conception et la mise au point de tels dispositifs de transfert se heurtent à de nombreuses difficultés dans la pratique car il faut déposer la pièce, avec une précision élevée, sur la palette, qui est elle-même immobilisée en un emplacement déterminé d'un poste de travail.

Il est connu pour cela d'utiliser différents dispositifs de transfert qui viennent chercher la pièce sur un distributeur, par exemple un convoyeur, pour la déplacer et venir ensuite la déposer sur la palette.

Cependant, comme le distributeur et la palette se trouvent souvent à des endroits éloignés, et en plus à des niveaux verticaux différents, cela nécessite la mise au point de dispositifs particulièrement complexes.

Les dispositifs de transfert connus n'ont pu fonctionner jusqu'à présent qu'avec des installations dans lesquelles les palettes se déplaçaient avec des vitesses et des accélérations relativement faibles.

Mais, avec les progrès de la robotique, les palettes se déplacent maintenant avec des vitesses élevées, typiquement de quelques mètres par seconde, et également avec des accélérations élevées. Or, les dispositifs de transfert connus ne permettent pas de suivre de telles cadences.

C'est en conséquence l'un des buts de l'invention de procurer un dispositif de transfert qui permet de déposer une pièce, avec une précision élevée, sur une palette immobilisée.

C'est encore un but de l'invention de procurer un tel dispositif de transfert qui peut fonctionner avec des cadences élevées, compatibles avec des installations modernes de circulation de palettes porte-pièces, dans lesquelles les palettes se déplacent avec des vitesses et des accélérations élevées.

C'est encore un but de l'invention de procurer un tel dispositif de transfert qui peut facilement s'intégrer à une telle installation de circulation de palettes porte-pièces.

L'invention propose à cet effet un dispositif de transfert d'au moins une pièce à déposer sur une palette immobilisée, lequel comprend un transporteur équipé d'un préhenseur et propre à saisir la pièce sur un distributeur, à la déplacer et à la déposer dans un outil de positionnement, ainsi qu'un manipulateur équipé d'une pince et propre à saisir la pièce dans une position précise dans l'outil de positionnement, à la déplacer, et à la déposer dans une position précise dans un réceptacle de positionnement porté par la palette.

Ainsi, le transfert de la pièce s'effectue par deux opérations successives et coordonnées. La pièce est d'abord transférée du distributeur à l'outil de positionnement par le transporteur, puis est transférée de cet outil de positionnement à un réceptacle de positionnement porté par la palette grâce au manipulateur.

La décomposition du transfert en deux mouvements successifs, effectués respectivement par deux moyens différents, permet de réaliser un transfert plus rapide et plus précis de la pièce que si ce transfert était réalisé par un seul moyen de déplacement. De plus, ce transfert s'effectue de façon beaucoup plus rapide du fait que les amplitudes respectives de déplacement du transporteur et du manipulateur sont plus limitées et affectées à des zones plus restreintes.

De manière avantageuse, le distributeur et l'outil de positionnement se situent à des niveaux verticaux voisins, tandis que le réceptacle de positionnement porté par la palette se situe à un niveau vertical en dessous du niveau vertical de l'outil de positionnement.

Ainsi, le transporteur réalise un déplacement de la pièce dans une zone sensiblement horizontale, tandis que le manipulateur effectue le déplacement de la pièce dans une zone sensiblement verticale.

Ceci permet d'utiliser un transporteur et un manipulateur ayant des structures différentes.

Dans une forme de réalisation de l'invention, le transporteur comprend un mécanisme à mouvements croisés propre à piloter un chariot suivant deux directions horizontales mutuellement perpendiculaires, et le chariot porte un actionneur vertical qui supporte le préhenseur.

Le préhenseur comprend avantageusement deux mâchoires mobiles susceptibles d'être rapprochées l'une de l'autre pour saisir la pièce sur le distributeur et d'être éloignées l'une de l'autre pour la déposer dans l'outil de positionnement. Toutefois, il est possible de réaliser le préhenseur par d'autres moyens, par exemple sous la forme d'une simple ventouse qui vient prendre la pièce sans aucune précision.

Dans une forme de réalisation préférée de l'invention, le manipulateur comprend un actionneur à déplacement vertical portant une potence propre à pivoter suivant un intervalle angulaire limité de valeur choisie, et la potence supporte la pince pour permettre à cette dernière d'être déplacée par un mouvement combiné de rotation horizontale et de translation verticale.

Selon une autre caractéristique de l'invention, le manipulateur est relié à des moyens de commande opératoires pour effectuer la séquence d'opérations suivante : amener la pince au-dessus de l'outil de positionnement, actionner la pince pour prélever la pièce dans ledit outil de positionnement, faire pivoter la potence suivant ledit intervalle angulaire, déplacer la potence verticalement, sans modification de son orientation angulaire, pour amener la pince au-dessus du réceptacle de positionnement porté par la palette, actionner la pince pour déposer la pièce dans ledit réceptacle de positionnement et ramener la pince au-dessus de l'outil de positionnement en vue d'une nouvelle séquence d'opérations.

Avantageusement, la pince comprend deux mâchoires mobiles susceptibles d'être rapprochées l'une de l'autre pour saisir la pièce dans l'outil de positionnement et d'être éloignées l'une de l'autre pour la déposer dans le réceptacle de positionnement porté par la palette.

Selon une autre caractéristique de l'invention, le dispositif comprend des moyens de centrage propres à assurer un positionnement mutuel précis de la pince, d'une part avec l'outil de positionnement, et d'autre part avec le réceptacle de positionnement porté par la palette.

Ces moyens de centrage comprennent avantageusement au moins deux broches mâles de centrage portées par la pince et propres à s'engager soit dans des trous correspondants de l'outil de positionnement, soit dans des trous correspondants du réceptacle de positionnement porté par la palette.

Pour faciliter le centrage, l'outil de positionnement est, de préférence, monté flottant sur un support fixe par l'intermédiaire de moyens élastiques.

De même, le réceptacle de positionnement est avantageusement monté flottant sur la palette par l'intermédiaire de moyens élastiques.

Ces moyens élastiques peuvent comprendre, par exemple, des pions ou des rondelles élastiques.

Sous un autre aspect, l'invention concerne une installation pour la circulation de palettes porte-pièces, laquelle comprend un dispositif de transfert comme défini précédemment, agencé pour déposer une pièce sur une palette au niveau d'un poste de l'installation.

Dans la description qui suit, faite à titre d'exemple, on se réfère aux dessins annexés, sur lesquels :
- la Figure 1 est une vue d'extrémité d'une partie d'une installation de circulation de palettes porte-pièces, qui est munie d'un dispositif de transfert selon l'invention ;
- la Figure 2 est une vue de face de l'installation ;
- la Figure 3 est une représentation schématique des mouvements opérés par le dispositif de transfert de l'invention ;
- la Figure 4 est une vue d'extrémité de la pince du manipulateur et de ses moyens de centrage ;
- la Figure 5 montre la coopération de la pince de la Figure 4 avec l'outil de positionnement ; et
- la Figure 6 montre la coopération de la pince de la Figure 4 avec le réceptacle de positionnement.

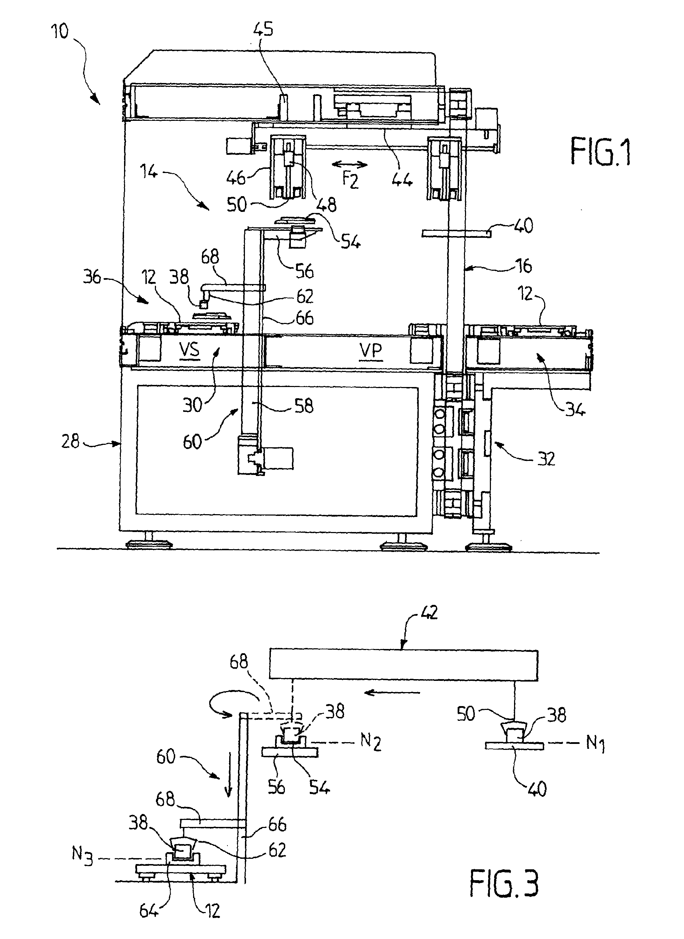

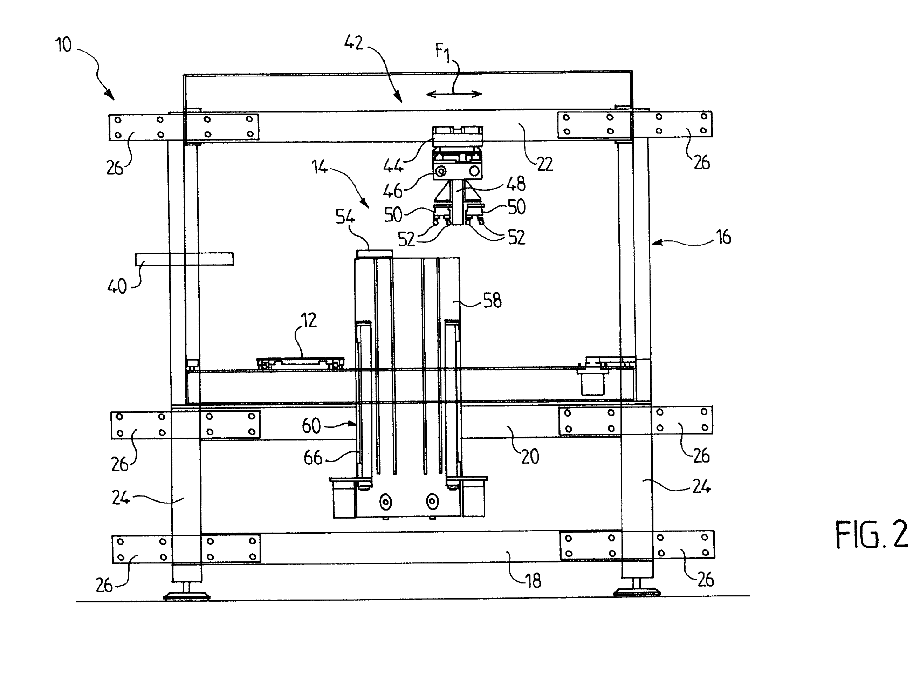

On se réfère maintenant conjointement aux Figures 1 et 2 pour décrire une installation 10 de circulation de palettes porte-pièces 12, laquelle installation est équipée d'un dispositif de transfert 14 conforme à l'invention.

L'installation 10, dont seulement une partie est représentée, peut être de tout type connu. Dans l'exemple, elle comprend un bâti formé d'au moins un cadre vertical 16 en structure mécano-soudée, formé d'un profilé horizontal inférieur 18, d'un profilé intermédiaire horizontal 20 et d'un profilé supérieur horizontal 22, dont les extrémités respectives sont fixées à deux montants verticaux 24 par l'intermédiaire de plaques de fixation 26 (Figure 2). Chacune de ces plaques s'étend horizontalement, de part et d'autre d'un montant 24, pour permettre la fixation du cadre à un autre cadre voisin (non représenté) pour compléter la structure de l'installation.

Dans l'exemple représenté, l'installation 10 comprend, de part et d'autre du cadre vertical 16, d'un côté un caisson 28 de forme générale parallélépipédique qui supporte un module 30 et, de l'autre côté, un caisson 32 qui supporte un autre module 34 (Figure 1).

Le module 30 définit une table horizontale et permet de faire circuler une palette, soit sur une voie principale VP proche du cadre 16, soit sur une voie secondaire VS (voie de dérivation) plus éloignée du cadre 16.

La structure particulière des modules 30 et 34 ne sera pas décrite en détail, car elles ne font pas directement partie de l'invention.

Le module 30 permet à une palette 12 soit de circuler sur la voie principale VP suivant une direction perpendiculaire au plan de la Figure 1, soit d'emprunter une voie de dérivation VS dans laquelle une palette peut être immobilisée au niveau d'un poste 36, par exemple d'un poste d'assemblage, comme montré à la Figure 1.

Par contre, le module 34 offre uniquement une fonction de circulation pure, c'est-à-dire que la palette 12 se déplace perpendiculairement au plan de la Figure 1.

On comprendra que l'installation proprement dite est susceptible de nombreuses variantes de réalisation et qu'elle peut être adaptée et comporter différents types de modules pour permettre de déplacer des palettes sur les modules en s'immobilisant au niveau de postes d'assemblage et/ou d'usinage en lesquels la pièce portée par la palette peut subir des opérations particulières, soit manuelles, soit automatiques.

Dans l'exemple, le poste 36 constitue un poste d'assemblage qui permet à une pièce 38 (Figure 1) d'être transférée depuis un distributeur 40 sur la palette 12, et en une position précise de cette dernière.

Le distributeur 40 permet d'approvisionner les pièces qui seront ensuite déposées sur les palettes 12 grâce au dispositif de transfert 14. L'approvisionnement des pièces s'effectue soit manuellement, soit de préférence automatiquement. Le distributeur 40 peut, notamment, être réalisé sous la forme d'un convoyeur qui amène les pièces, une par une, en un emplacement donné de l'installation, l'approvisionnement de la pièce n'étant pas forcément dans une position rigoureuse.

Lorsqu'on parle ici d'une pièce, il faut comprendre que le dispositif de transfert 14 peut transférer une ou plusieurs pièces en même temps pour augmenter les cadences de production.

Un tel dispositif de transfert trouve en particulier un intérêt lorsqu'il s'agit d'assembler une pièce, par exemple un composant d'un produit, qui est approvisionné par le distributeur 40, sur une autre pièce, par exemple un autre composant du même produit, qui se trouve déjà positionné de façon précise sur la palette 12.

On comprendra que le dispositif doit permettre de transférer et déposer ce premier composant dans une position extrêmement précise pour qu'il puisse s'assembler sur le composant déjà présent sur la palette.

Le dispositif de l'invention répond à de telles exigences et permet de déposer la pièce 38 de manière extrêmement précise, et cela avec des cadences rapides, compatibles avec les installations modernes, dans lesquelles les palettes se déplacent à des vitesses de plus en plus élevées.

On décrira maintenant la structure du dispositif de transfert 14 en référence aux Figures 1, 2 et 3.

Le dispositif 14 comprend un transporteur 42 comprenant un mécanisme à mouvements croisés constitué d'une traverse horizontale 44, formant un pont mobile, se déplaçant le long du profilé supérieur 22 et le long d'un profilé 45 qui s'étend parallèlement au profilé supérieur 22.

La traverse 44 peut ainsi se déplacer parallèlement aux profilés 22 et 45, dans un sens ou dans l'autre, comme représenté par la double flèche F1 sur la Figure 2.

La traverse 44 porte elle-même un chariot 46 qui peut se déplacer horizontalement le long de la traverse 44, dans un sens ou dans l'autre, comme montré par la double flèche F2 sur la Figure 1.

Ainsi, le transporteur 42 permet de piloter le chariot 46 suivant deux directions horizontales mutuellement perpendiculaires, comme représenté par les flèches F1 et F2. Le chariot 46 porte un actionneur vertical 48, par exemple un vérin pneumatique, qui supporte ici deux préhenseurs 50, dont chacun comprend deux mâchoires mobiles 52 susceptibles d'être rapprochées l'une de l'autre pour saisir une pièce 38 sur le distributeur 40 et ensuite d'être éloignées l'une de l'autre pour déposer la pièce 38.

En variante, chacun des préhenseurs pourrait être réalisé d'une autre manière, en particulier sous la forme d'une simple ventouse qui prend la pièce sans aucune précision, le but de l'invention étant également de permettre l'alimentation de pièces pour les déposer sur une palette avec une grande précision grâce à des moyens de centrage qui seront décrits plus loin.

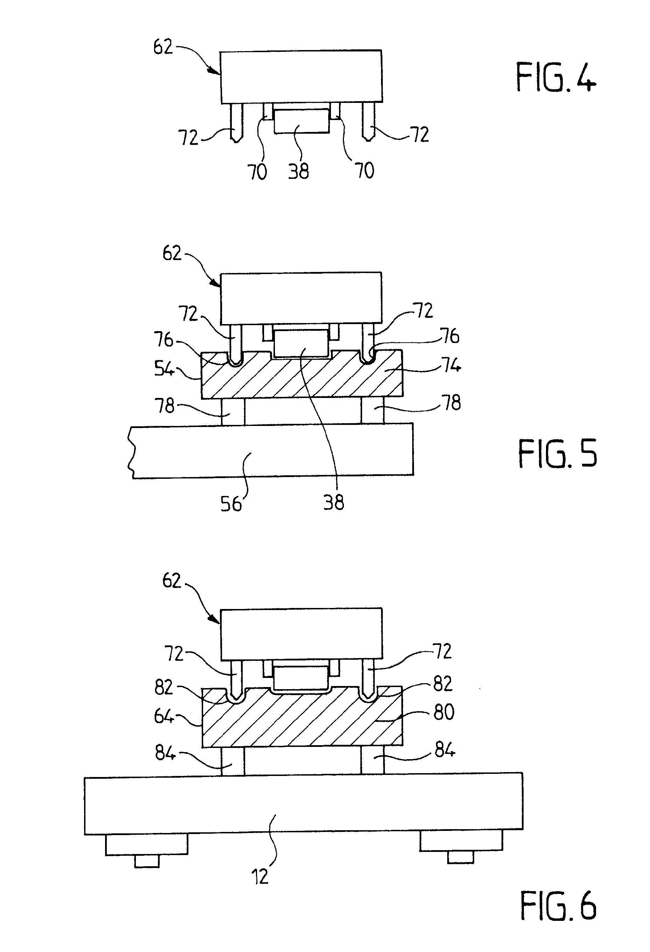

La pièce 38 est ici déposée sur un outil de positionnement intermédiaire 54, formant berceau de réception de la pièce, et portée sur un support fixe 56 réalisé ici sous la forme d'une console horizontale en porte-à-faux portée à l'extrémité supérieure d'un support vertical 58, lequel est situé au droit du poste d'assemblage 36. Ce support vertical 58 s'étend respectivement au-dessus et au-dessous du module 30. On notera que le distributeur 40 et l'outil de positionnement 54 se situent à des niveaux verticaux respectifs N1 et N2 voisins, tandis que la palette se situe à un niveau vertical N3 en dessous du niveau N2 de l'outil de positionnement 54 (Figure 3).

Le transporteur 42 est piloté par des moyens de commande appropriés, de structure en soi connue, pour saisir une pièce 38 sur le distributeur 40 et la déposer ensuite dans l'outil de positionnement 54, et cela dans une position qui n'est pas rigoureusement précise.

Le dispositif de transfert 14 comprend, en outre, un manipulateur 60 équipé d'une pince 62 propre à saisir la pièce 38 dans une position précise sur l'outil de positionnement 54, à la déplacer et à la déposer dans une position précise dans un réceptacle de positionnement 64 porté par la palette 12.

Le manipulateur 60 comprend un actionneur 66 à déplacement vertical, par exemple du type à colonne, lequel porte une potence 68, réalisée sous la forme d'un bras en porte-à-faux, dont une première extrémité est portée par l'actionneur 66, et dont une extrémité est portée par l'actionneur 60 et dont une autre extrémité porte la pince 62. La potence 68 est propre à pivoter suivant un intervalle angulaire limité de valeur choisie qui, dans l'exemple, correspond à 180° ; tandis que l'actionneur 66 à déplacement vertical permet de déplacer verticalement la potence entre une position haute et une position basse.

La pince 62 du manipulateur comprend deux mâchoires mobiles 70 (Figure 4) susceptibles d'être rapprochées l'une de l'autre pour saisir la pièce 38 dans l'outil de positionnement 54 et d'être éloignées l'une de l'autre pour déposer la pièce dans le réceptacle de positionnement 64 porté par la palette. Le manipulateur 60 est relié à des moyens de commande qui permettent d'effectuer la séquence d'opérations suivante.

La pince 62 est d'abord amenée au-dessus de l'outil de positionnement 54, puis elle est actionnée pour prélever une pièce 38 dans l'outil de positionnement. Ensuite, on fait pivoter la potence d'un intervalle angulaire donné, ici de 180°, par rotation dans un plan horizontal. Ensuite, la potence est déplacée verticalement, de la position haute à la position basse, par l'actionneur 66, ce qui permet d'amener la pince 62 (qui maintient la pièce 38) au-dessus du réceptacle de positionnement 64 que porte la palette. Ensuite, on actionne la pince 62 pour éloigner ses mâchoires 70 et déposer la pièce dans le réceptacle de positionnement. Ces moyens permettent ensuite de ramener la pince au-dessus de l'outil de positionnement 54 en vue d'une nouvelle séquence d'opérations.

Les séquences d'opérations précédentes sont schématisées sur la Figure 3 où l'on voit que le transfert de la pièce 38 s'effectue en deux phases successives et coordonnées entre elles, la première phase s'effectuant essentiellement horizontalement par le transporteur 42 à mouvements croisés, et la deuxième phase s'effectuant par le manipulateur 60, par combinaison d'un mouvement de rotation horizontale et d'une translation verticale.

Ces deux moyens permettent de déplacer les pièces à vitesse élevée. Pendant que le manipulateur déplace la pièce de l'outil de positionnement 54 vers le réceptacle de positionnement 64, le transporteur 44 revient à sa position initiale pour ramener le préhenseur 50 au-dessus du distributeur 40 pour venir prélever une autre pièce 38.

Une caractéristique importante de l'invention réside dans le fait que des moyens de centrage sont prévus pour assurer un positionnement précis de la pince 62, d'une part avec l'outil de positionnement 54, et d'autre part avec le réceptacle de positionnement 64.

Comme on peut le voir sur la Figure 4, la pince 62 comprend des broches mâles de centrage 72 portées par la pince et propres à coopérer, soit avec l'outil de positionnement 54 (Figure 5), soit avec le réceptacle de positionnement 64 (Figure 6).

L'outil de positionnement 54 comprend un socle 74 formant berceau de réception de la pièce dans lequel sont aménagés des trous 76 pour recevoir les broches 72 de la pince, lorsque cette dernière est rapprochée de l'outil de positionnement 54. Les broches 72 ont une extrémité conique ou arrondie, tandis que les trous 76 sont cylindriques et débouchent vers l'extérieur. Ils sont avantageusement évasés vers l'extérieur pour faciliter davantage l'introduction des broches 72.

Par ailleurs, pour faciliter cette introduction, le socle 74 de l'outil de positionnement est monté flottant sur le support fixe 56 par l'intermédiaire de moyens élastiques constitués ici de pions ou rondelles élastiques.

De façon correspondante, le réceptacle de positionnement 64 comprend un socle 80 formant berceau de réception de la pièce et adapté à la forme de celle-ci. Dans le socle 80, sont aménagés des trous 82, de forme évasée, destinés à faciliter l'introduction des broches 72 lorsque la pince 62 est rapprochée du réceptacle de positionnement 64.

Comme précédemment, le socle 80 est fixé à la palette 12 par des moyens élastiques 84 qui comprennent aussi des pions ou rondelles élastiques. Le dispositif de transfert de l'invention est susceptible de nombreuses variantes de réalisation, notamment en ce qui concerne la structure du transporteur et celle du manipulateur.

Ce dispositif peut équiper différents types d'installations de circulation de palettes porte-pièces, dans lesquelles les palettes sont déplacées à l'intérieur d'un module, et d'un module à un autre, soit par des moyens d'entraînement équipant les modules, soit par des moyens de motorisation propres de la palette.

## Revendications

1. Dispositif de transfert d'au moins une pièce à déposer sur une palette immobilisée,
**caractérisé en ce qu'**il comprend un transporteur (42) équipé d'un préhenseur (50) et propre à saisir la pièce (38) sur un distributeur (40), à la déplacer et à la déposer dans un outil de positionnement (54), ainsi qu'un manipulateur (60) équipé d'une pince (62) et propre à saisir la pièce dans une position précise dans l'outil de positionnement (54), à la déplacer, et à la déposer dans une position précise dans un réceptacle de positionnement (64) porté par la palette (12).

2. Dispositif selon la revendication 1, **caractérisé en ce que** le distributeur (40) et l'outil de positionnement (54) se situent à des niveaux verticaux (N1, N2) voisins, tandis que le réceptacle de positionnement (64) porté par la palette se situe à un niveau vertical (N3) en dessous du niveau vertical (N2) de l'outil de positionnement (54).

3. Dispositif selon l'une des revendications 1 et 2, **caractérisé en ce que** le transporteur (42) comprend un mécanisme à mouvements croisés (22, 45, 44) propre à piloter un chariot (46) suivant deux directions horizontales (F1, F2) mutuellement perpendiculaires, et **en ce que** le chariot (46) porte un actionneur vertical (48) qui supporte le préhenseur (50).

4. Dispositif selon l'une des revendications 1 à 3, **caractérisé en ce que** le préhenseur (50) comprend deux mâchoires mobiles (52) susceptibles d'être rapprochées l'une de l'autre pour saisir la pièce (38) sur le distributeur (40) et d'être éloignées l'une de l'autre pour la déposer dans l'outil de positionnement (64).

5. Dispositif selon l'une des revendications 1 à 4, **caractérisé en ce que** le manipulateur (60) comprend un actionneur (66) à déplacement vertical portant une potence (68) propre à pivoter suivant un intervalle angulaire limité de valeur choisie, et **en ce que** la potence (68) supporte la pince (62) pour permettre à cette dernière d'être déplacée par un mouvement combiné de rotation horizontale et de translation verticale.

6. Dispositif selon la revendication 5, **caractérisé en ce que** le manipulateur (60) est relié à des moyens de commande opératoires pour effectuer la séquence d'opérations suivantes: amener la pince (62) au-dessus de l'outil de positionnement (54), actionner la pince (62) pour prélever la pièce (38) dans l'outil de positionnement (54), faire pivoter la potence (68) suivant ledit intervalle angulaire, déplacer la potence (68) verticalement, sans modification de son orientation angulaire, pour amener la pince (62) au-dessus du réceptacle de positionnement (64) porté par la palette, actionner la pince (62) pour déposer la pièce dans ledit réceptacle de positionnement (64) et ramener la pince au-dessus de l'outil de positionnement (54) en vue d'une nouvelle séquence d'opérations.

7. Dispositif selon l'une des revendications 5 et 6, **caractérisé en ce que** ledit intervalle angulaire limité correspond à 180°.

8. Dispositif selon l'une des revendications 5 à 7, **caractérisé en ce que** la pince (62) comprend deux mâchoires mobiles (70) susceptibles d'être rapprochées l'une de l'autre pour saisir la pièce (38) dans l'outil de positionnement (54) et d'être éloignées l'une de l'autre pour la déposer dans le réceptacle de positionnement (64) porté par la palette (12).

9. Dispositif selon l'une des revendications 5 à 8, **caractérisé en ce qu'**il comprend des moyens de centrage (72, 76, 82) propres à assurer un positionnement mutuel précis de la pince (62), d'une part avec l'outil de positionnement (54), et d'autre part avec le réceptacle de positionnement (64) porté par la palette.

10. Dispositif selon la revendication 9, **caractérisé en ce que** les moyens de centrage comprennent au moins deux broches mâles de centrage (72) portées par la pince (62) et propres à s'engager soit dans des trous correspondants (76) de l'outil de positionnement (54), soit dans des trous correspondants (82) du réceptacle de positionnement (64) porté par la palette.

11. Dispositif selon la revendication 10, **caractérisé en ce que** l'outil de positionnement (54) est monté flottant sur un support fixe (56) par l'intermédiaire de moyens élastiques (78).

12. Dispositif selon la revendication 10, **caractérisé en ce que** le réceptacle de positionnement (64) est monté flottant sur la palette (12) par l'intermédiaire de moyens élastiques (84).

13. Dispositif selon l'une des revendications 11 et 12, **caractérisé en ce que** lesdits moyens élastiques (78, 84) comprennent des pions ou rondelles élastiques.

14. Installation pour la circulation de palettes porte-pièces, **caractérisée en ce qu'**elle comprend un dispositif de transfert (14) selon l'une des revendications 1 à 13, agencé pour déposer une pièce (38) sur une palette (12) immobilisée au niveau d'un poste (36) de l'installation.
